(19) Europäisches Patentamt
European Patent Office
Office européen des brevets

(11) **EP 4 668 565 A1**

(12) **EUROPEAN PATENT APPLICATION**
published in accordance with Art. 153(4) EPC

(43) Date of publication:
**24.12.2025 Bulletin 2025/52**

(21) Application number: 24757231.6

(22) Date of filing: **31.01.2024**

(51) International Patent Classification (IPC):
*H02M 3/335* (2006.01)   *H02M 3/28* (2006.01)
*H02M 3/158* (2006.01)   *H02M 1/00* (2006.01)

(52) Cooperative Patent Classification (CPC):
**H02M 1/00; H02M 3/158; H02M 3/28; H02M 3/335**

(86) International application number:
**PCT/KR2024/095067**

(87) International publication number:
**WO 2024/172510 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 15.02.2023  KR 20230020391
09.11.2023  KR 20230154901

(71) Applicant: **LG INNOTEK CO. LTD**
**Gangseo-gu**
**Seoul 07796 (KR)**

(72) Inventors:
• **LEE, Jae Sam**
  **Seoul 07796 (KR)**
• **CHOI, Young Mook**
  **Seoul 07796 (KR)**
• **HONG, Eun Hyuk**
  **Seoul 07796 (KR)**

(74) Representative: **M. Zardi & Co S.A.**
**Via G. B. Pioda, 6**
**6900 Lugano (CH)**

(54) **POWER CONVERSION DEVICE**

(57)     A power conversion device according to an embodiment of the present invention comprises: a 1-1 input/output unit and a 1-2 input/output unit respectively connected to a first high voltage side and a second high voltage side connected in series; a first power conversion unit connected to the 1-1 input/output unit; a second power conversion unit connected to the 1-2 input/output unit; a second input/output unit connected to the first power conversion unit and the second power conversion unit and connected to a low voltage side; and a control unit that controls the operation of the first power conversion unit or the second power conversion unit, wherein the control unit controls to convert the voltages of the first high voltage side and the second high voltage side, and output the converted voltage to the low voltage side, or convert the voltage of the low voltage side, and output the converted voltage to the first high voltage side or the second high voltage side, and operates bidirectionally.

【FIG. 15】

## Description

[Technical Fields]

The present invention relates to a power conversion device, and more specifically to a power conversion device with high power conversion efficiency.

[Background Arts of the Invention]

Recently, the capacity of batteries that store electrical energy, such as those used in electric vehicles or hybrid vehicles, has been increasing, and the voltage of batteries has also been increasing from 400 V to 800 V. In order to operate internal components such as vehicle electrical equipment using the electrical energy stored in high-voltage batteries, it is necessary to convert the voltage to a lower voltage.

Technology is required for converters that can reliably supply the converted voltage from high-voltage batteries to low-voltage systems while achieving high power conversion efficiency.

[Summary of the Invention]

[Technical Subjects]

The technical subject that the present invention seeks to solve is to provide a power conversion device with high power conversion efficiency.

[Technical Solution]

In order to solve the abovementioned technical subjects, a power conversion device according to an embodiment of the present invention may comprise: a first-first input/output unit and a first-second input/output unit respectively connected to a first high voltage side and a second high voltage side connected in series; a first power conversion unit connected to the first-first input/output unit; a second power conversion unit connected to the first-second input/output unit; a second input/output unit connected to the first power conversion unit and the second power conversion unit and connected to a low voltage side; and a control unit that controls the operation of the first power conversion unit or the second power conversion unit, wherein the control unit controls to convert the voltages of the first high voltage side and the second high voltage side, and output the converted voltage to the low voltage side, or convert the voltage of the low voltage side, and output the converted voltage to the first high voltage side or the second high voltage side, and operates bidirectionally.

Preferably, but not necessarily, the control unit may receive a voltage inputted from the first high voltage side or the second high voltage side and control the buck mode, which reduces voltage, in peak current mode, and receive a voltage inputted from the low voltage side and control the boost mode, which increases the voltage, in average current mode.

Preferably, but not necessarily, the control unit in the buck mode may include: a constant current control signal generation unit that rectifies the low voltage side voltage and generates a constant current control signal; a constant voltage control signal generation unit that rectifies the low voltage side current and power and generates a constant voltage control signal; a soft start control signal generation unit that generates a soft start control signal to block inrush current or peak voltage; and a signal selection unit that selects the smallest value signal among the constant current control signal, the constant voltage control signal, and the soft start control signal.

Preferably, but not necessarily, the control unit in the buck mode may control the first power conversion unit and the second power conversion unit in peak current mode and compensate for the current rise slope in the peak current mode according to a difference between the first input voltage and the second input voltage.

Preferably, but not necessarily, the first power conversion unit may include: a first input/output unit connected to the first high voltage side; a first switching unit connected to the first input/output unit; a transformer unit including a first transformer and a second transformer, where the first transformer is connected to the first switching unit at the primary side; a second switching unit connected to the secondary side of the transformer unit; a second input/output unit connected to the secondary side of the transformer unit and the low voltage side; a control unit for controlling the first switching unit and the second switching unit, wherein the first switching unit includes first and second switches that are complementarily conductive, and the second switching unit includes a third switch connected at the secondary side of the first transformer; and a fourth switch connected at the secondary side of the second transformer.

Preferably, but not necessarily, the control unit may include a PWM generation unit that controls a dead-time or delay time of the first switch to the fourth switch.

Preferably, but not necessarily, the first switch may be connected in series with the transformer unit, the second switch may be connected in parallel with the transformer unit, and the first switch is turned on after the second switch is turned off and the first time has elapsed, and the second switch is turned on after the first switch is turned off and the second time has elapsed, wherein the first time may vary depending on an applied voltage, and the second time may be a preset time.

Preferably, but not necessarily, the third switch in the buck mode may operate in response to the operation of the second switch or operates in response after a predetermined time, and the fourth switch turns on after the second switch turns off and a third time has elapsed, and turns off after the first switch turns off and a fourth time has elapsed, wherein the third time and the fourth time vary depending on the output current.

Preferably, but not necessarily, the control unit in the boost mode may include a constant current control signal generation unit that rectifies the low voltage side voltage and generates a constant current control signal; a soft start control signal generation unit that generates a soft start control signal to block inrush current or peak voltage; and a signal selection unit that selects the signal with the smaller value among the constant current control signal and the soft start control signal.

Preferably, but not necessarily, the fourth switch in the boost mode may be such that the second switch is turned off and turned on after the third time, the first switch is turned off and turned off after the fourth time, the third switch may be such that the first is turned off and turned on after the fifth time, the fourth switch is turned on and turned off after the sixth time.

[Advantageous Effects]

According to the embodiments of the present invention, in converting voltage, bidirectional operation is possible and efficiency can be increased. Furthermore, zero-voltage switching can be achieved, input voltages of serially connected inputs can be balanced, and bidirectional driving and initial charging are possible.

[Brief Descriptions of Drawings]

FIG. 1 is a block diagram of a power conversion device according to an embodiment of the present invention.
FIG. 2 is a block diagram of a power conversion device according to an embodiment of the present invention.
FIGS. 3 and 4 are example circuit diagrams of a power conversion device according to an embodiment of the present invention.

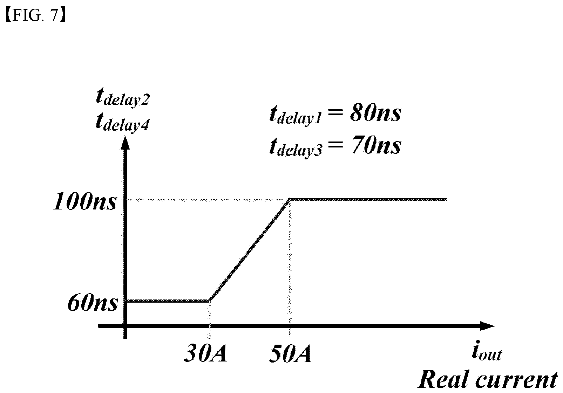

FIGS. 5 to 7 are diagrams illustrating the switching operation of the power conversion device according to an embodiment of the present invention.
FIGS. 8a to 8c show simulation results of the operation of a power conversion device according to an embodiment of the present invention.
FIG. 9 shows the connection relationship of a power conversion device according to an embodiment of the present invention, in which the inputs are connected in series and the outputs are connected in parallel.
FIGS. 10 to 13 are drawings illustrating the process of balancing the input voltage by the power conversion device according to the embodiment of the present invention.
FIGS. 14a and 14b are simulation results of the input voltage balancing operation of the power conversion device according to an embodiment of the present invention.

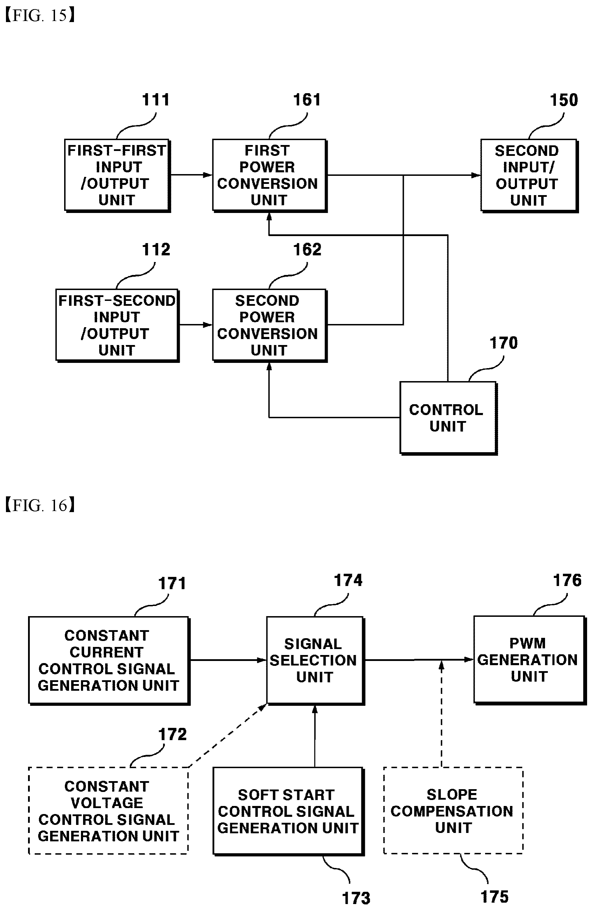

FIG. 15 is a block diagram of a power conversion device according to an embodiment of the present invention, wherein inputs are connected in series.
FIGS. 16 to 19 are diagrams illustrating the process by which the power conversion device according to an embodiment of the present invention operates in both directions.
FIGS. 20a to c and 21a to c are simulation results of the bidirectional operation of the power conversion device according to an embodiment of the present invention.
FIG. 22 is a diagram illustrating the process of performing an initial charging in the power conversion device according to an embodiment of the present invention.
FIGS. 23a and 23b are simulation results of the initial charging of the power conversion device according to an embodiment of the present invention.

[Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Still furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

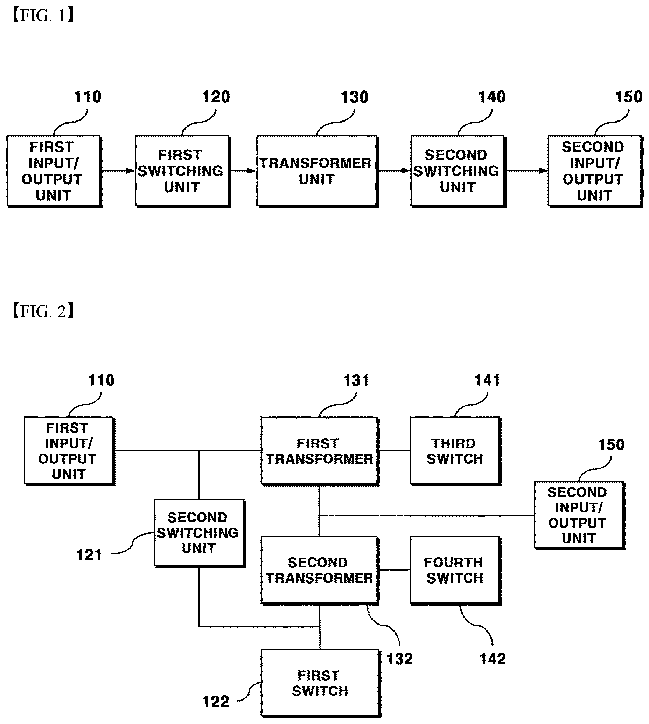

FIG. 1 is a block diagram of a power conversion device according to an embodiment of the present invention. The power conversion device according to an embodiment of the present invention may comprise a first input/output unit (110), a first switching unit (120), a transformer unit (130), a second switching unit (140), and a second input/output unit (150), and may further include a control unit (170), a first inductor (L1), a second inductor (L2), a third inductor (L3), and a first capacitor (C1). The power conversion device according to an embodiment of the present invention may be an active-clamp forward flyback converter. Additionally, it may be a converter where the input side is connected in series and the output side is connected in parallel. The first input/output unit (110) is connected to the high-voltage side.

The first input/output unit (110) is connected to the high-voltage side, allowing high voltage to be inputted or converted voltage to be outputted to the high-voltage side. In the step-down mode, it functions as an input unit, and in the step-up mode, it functions as an output unit. The first input/output unit (110) may include a high-voltage side capacitor. Here, the high-voltage refers to the voltage of the battery or power source connected to the first input/output unit (110) being relatively higher than the voltage of the battery or load side connected to the second input/output unit (150), and does not denote a specific voltage value.

The first input/output unit (110) may be connected to a high-voltage battery. Alternatively, an external power source may be connected. For example, the voltage of the external power source or battery connected to the first input/output unit (110) may be 400 V to 800 V. Two 400 V batteries may be connected in series to operate as an 800 V battery. This will be explained in detail below. The first switching unit (120) is connected to the first input/output unit (110).

The first switching unit (120) is connected to the first input/output unit (110) and can transmit the voltage inputted to the first input/output unit (110) to the transformer unit (130) or transmit the voltage outputted from the transformer unit (130) to the first input/output unit (110).

The first switching unit (120) may include first switch (122) and second switch (121) that are complementary conductive. The connection relationship and operation of the first switch (122) and second switch (121) will be described in detail later.

The transformer unit (130) includes a first transformer (131) and a second transformer (132) connected at the primary side to the first switching unit (120). The transformers may be isolation transformers. The transformer unit (130) may include a bidirectional transformer that converts the voltage inputted to the primary side and outputs it to the secondary side, or converts the voltage inputted to the secondary side and outputs it to the primary side. The direction of the first input/output unit (110) is described as the primary side of the transformer unit (130), and the direction of the second input/output unit (150) is described as the secondary side of the transformer unit (130). That is, the primary side of the transformer may be high voltage, and the secondary side may be low voltage, and therefore, the turns ratio may be n:1.

The second switching unit (140) is connected to the secondary side of the transformer unit (130).

The second switching unit (140) is connected to the secondary side of the transformer unit (130) and can output the voltage outputted from the transformer unit (130) to the second input/output unit (150). The second switching unit (140) can operate as a rectifier that rectifies the output voltage of the transformer unit (130). The second switching unit (140) may include a third switch (141) connected to the secondary side of the first transformer (131) and a fourth switch (142) connected to the secondary side of the second transformer (132).

The third switch (141) and the fourth switch (142) may include FETs and may be MOSFETs including body diodes. Additionally, the third switch (141) and the fourth switch (142) may be SR (Synchronous Rectification) MOSFETs. The first switch (122) and the second switch (121) are also the same as the third switch (141) and the fourth switch (142), and may be FETs, MOSFETs including body diodes, or SR MOSFETs.

The second input/output unit (150) is connected to the secondary side of the transformer unit (130) and the low voltage side.

The second input/output unit (150) is connected to the secondary side of the transformer unit (130), enabling it to output the voltage converted by the transformer unit (130) to the low-voltage side or to receive an input voltage from the low-voltage side and transmit it to the transformer unit (130). In buck mode, it functions as an output unit, and in boost mode, it functions as an input unit. The second input/output unit (150) may include a low voltage capacitor. Here, 'low voltage' refers to the voltage of a battery or load connected to the second input/output unit (150) being relatively smaller than the voltage of the battery or power source connected to the first input/output unit (110), and does not denote a specific voltage value.

The second input/output unit (150) may be connected to a low-voltage battery. Alternatively, a load may be connected. For example, the voltage of the battery connected to the second input/output unit (150) may be 12 V.

The first switch (122) is connected in series with the transformer unit (130), and the second switch (121) may be connected in parallel with the transformer unit (130). The first input/output unit (110) may include a first inductor (L1) connected in series with the transformer unit (130) between the first input/output unit (110) and the transformer unit (130), a second inductor (L2) connected in parallel with the primary side of the first transformer (131) and a third inductor (L3) connected in parallel with the primary side of the second transformer (132). Additionally, it may include a first capacitor (C1) connected to the first node between the first input/output unit (110) and the first inductor (L1) and connected in series with the second switch (121). The second node between the first switch (122) and the transformer unit (130) may be configured to be connected to the first switch (122).

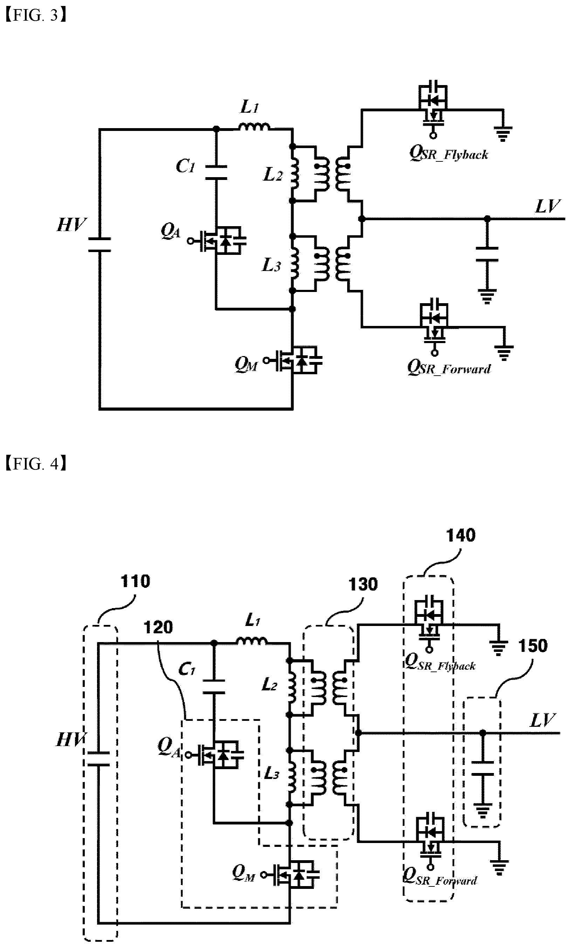

The first input/output unit (110), the first switching unit (120), the transformer unit (130), the second switching unit (140), and the second input/output unit (150) may be implemented as shown in FIG. 3. Each configuration may correspond to that shown in FIG. 4.

In FIG. 3, the first switch (122) is Q_M (Master switch), the second switch (121) is Q_A (Auxiliary switch), the first inductor is L1, the second inductor is L2, the third inductor is L3, the first capacitor is C1, the third switch (141) is Q_SR_Flyback, and the fourth switch is Q_SR_Forward, and may be connected as shown in FIG. 3. The first input/output unit (110) may include a high voltage side capacitor, and the second input/output unit (150) may include a low voltage side capacitor. The first inductor (L1), the second inductor (L2), the third inductor (L3), and the first capacitor (C1) can form an LC filter to remove noise from the input voltage, thereby forming a noise filter unit.

The direction of the current applied to the transformer unit (130) may change depending on the operation of the first switch (122) and the second switch (121). The first switch (122) and the second switch (121) are complementary conductors that allow current to flow through the first transformer (131) and the second transformer (132), and can change the direction of the current flow.

When the battery is connected to the high voltage side, voltage is inputted to the first input/output section (110), and at this time, if the first switch (122) is on and the second switch (121) is off, current flows in the first direction connecting the first inductor (L1), the second inductor (L2), the third inductor (L3), and the first switch (122). Current flows through the first transformer (131) and the second transformer (132), and voltage is applied to the first transformer (131) and the second transformer (132). The first transformer (131) and the second transformer (132) convert the inputted voltage and output it to the secondary side. At this time, if the fourth switch (142) is on, a current path is formed through the fourth switch (142) and the secondary side of the second transformer (132), and voltage is outputted to the low voltage side.

When the first switch (122) is off and the second switch (121) is on, no current flows through the first switch (122), and current flows in the second direction connecting the first capacitor (C1), the second switch (121), the third inductor (L3), the second inductor (L2), and the first inductor (L1). In other words, current flows in the opposite direction, thereby eliminating noise generated by the voltage applied to the first transformer (131) and the second transformer (132). Additionally, when the third switch (141) is on, a current path to the second input/output unit (150) is formed through the third switch (141) and the secondary side of the first transformer (131), resulting in voltage outputted to the low voltage side.

Since noise is eliminated by the operation of the first switch (122) and the second switch (121), an inductor for eliminating noise may not be included in the secondary side of the transformer unit (130), i.e., the second input/output unit (150). Inductors may have issues such as increased size and cost due to their need to withstand high currents. By not including an inductor in the second input/output unit (150), size and cost can be reduced.

The control unit (170) controls the first to fourth switches such that when voltage is inputted from the high voltage side to the first input/output unit, voltage is outputted from the second input/output unit to the low voltage side, and when voltage is inputted from the low voltage side to the second input/output unit, voltage is outputted from the first input/output unit to the high voltage side.

The control unit (170) can control the first switch (122) and the second switch (121) in a complementary manner, applying a dead time or delay time for zero voltage switching (ZVS).

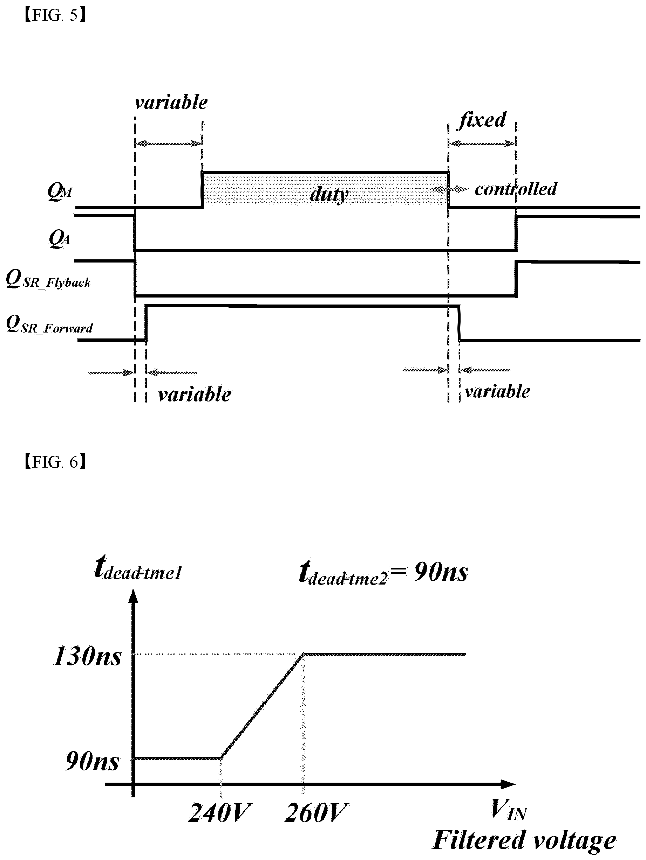

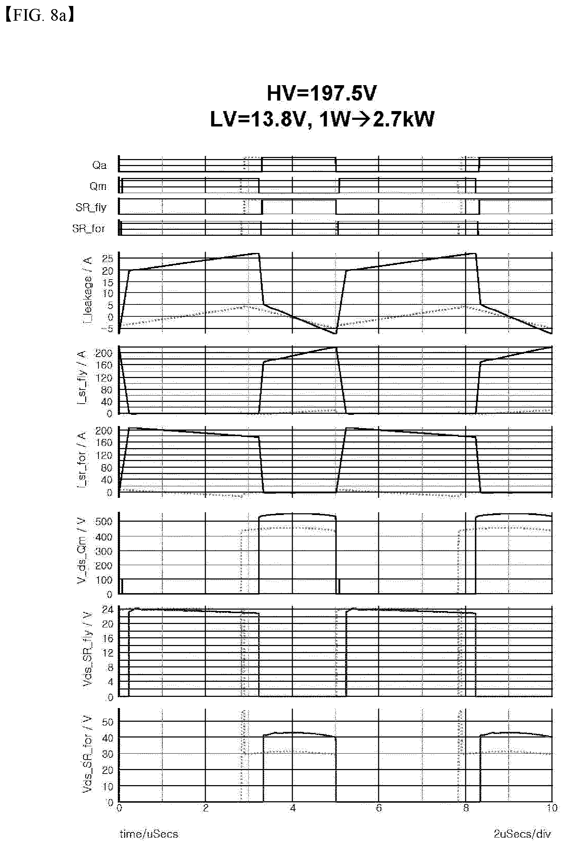

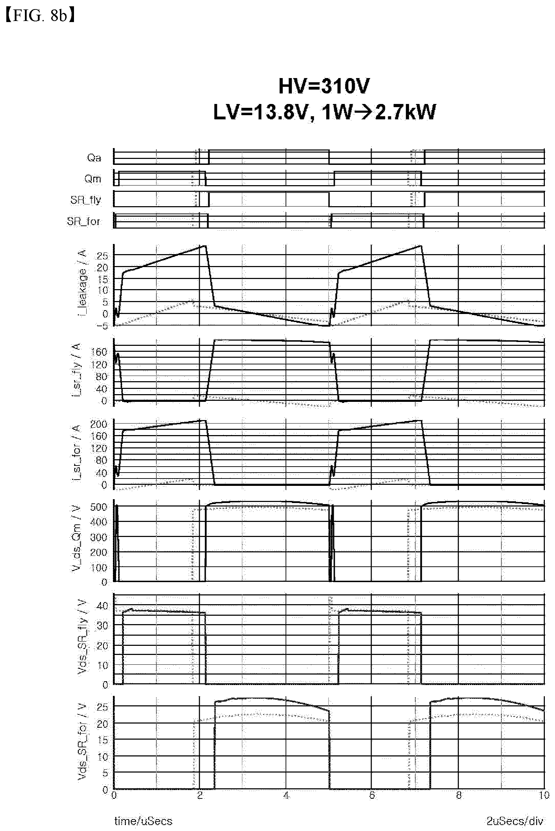

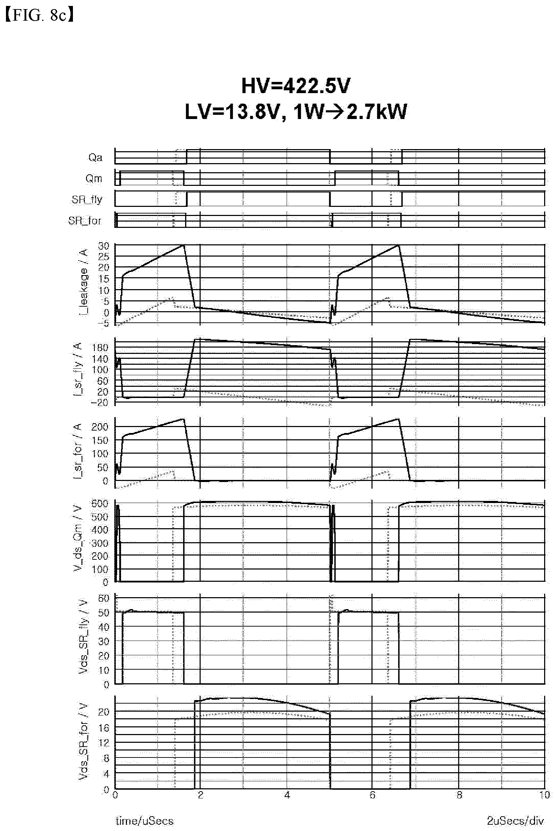

When the second switch (121) is turned off and the first switch (122) is turned on, it is possible to control the first switch (122) to turn on after a first time (period) has elapsed since the second switch (121) was turned off. Here, the first time (period) may vary depending on the inputted voltage. After the second switch (121) is turned off to allow the first switch (122) to turn on at zero voltage, a dead time is applied during which both the first switch (122) and the second switch (121) remain off for the first time period. At this time, the first time period may be longer as the input voltage increases. For example, as shown in FIG. 6, when the input voltage (V_IN) is less than 240 V, a dead time of 90 ns, which is the minimum dead time for zero voltage switching, is applied. In the range of 240 to 260 V, the dead time may be linearly increased within the range of 90 to 130 ns. If the dead time exceeds 130 ns, it may be difficult to secure the duty time required for voltage conversion, so the first time can be limited to 130 ns or less. The simulation results for the first time varying with the input voltage are shown in FIGS. 8a to 8c. As the input voltage increases, the first time can be increased to ensure zero voltage switching.

When the first switch (122) is turned off and the second switch (121) is turned on, it is possible to control in such a manner that the second switch (121) turns on when the first switch (122) is turned off and a second time has elapsed. Here, the second time may be a pre-set time that is inputted. When the second switch (121) is turned on, the effect of zero voltage switching is not significant, so the second time can be fixed as a pre-set time to apply a dead time. At this time, the second time can be set as the minimum dead time for zero voltage switching. For example, the second time may be set to 90 ns as shown in FIG. 6. Alternatively, it can be controlled to vary in response to the first time.

The control unit (170) can also apply a delay time to the third switch (141) and the fourth switch (142) for control.

The third switch (141) may be controlled to operate in response to the operation of the second switch (121) or to operate after a pre-set time. The operation of the third switch (141) is similar to that of the second switch (121), where the effect of zero voltage switching is not significant, and the peak voltage is not large either. Therefore, a pre-set time can be applied to the third switch (141). In this case, a fixed time of 80 ns or 70 ns may be applied.

The fourth switch (142) can be controlled so that it turns on after the second switch (121) turns off and after the third time, and turns off after the first switch (122) turns off and after the fourth time. Here, the third time and the fourth time may be varied depending on the output current. After the second switch (121) is turned off to turn on the fourth switch (142) at zero voltage, it is not turned on immediately, but a delay time can be applied for the third time. At this time, the third time can be longer as the output current increases. Additionally, after the first switch (122) is turned off, instead of turning it off immediately, a delay time can be applied to keep it on for the fourth time period before turning it off. For example, as shown in FIG. 6, to reduce the peak voltage of the SR MOSFET under light load when the output current (i_out) is less than 30 A, a delay time of 60 ns is applied, and in the range of 30 to 50 A, to enable zero-voltage switching turn-on of the SR MOSFET under medium load, the delay time can be linearly increased within the range of 60 to 100 ns. If the delay time exceeds 100 ns, it may be difficult to secure the duty time required for voltage conversion; therefore, the third and fourth time can be limited to 100 ns or less.

The power conversion device according to an embodiment of the present invention may comprise a first-first input/output unit (111), a first-second input/output unit (112), a first power conversion unit (161), a second power conversion unit (162), and a second input/output unit (150), and may include a control unit (170). The first input/output unit (110) may be connected to multiple batteries rather than a single battery. In this case, the multiple batteries may be connected in series. For example, two 400 V batteries may be connected in series to operate at 800 V.

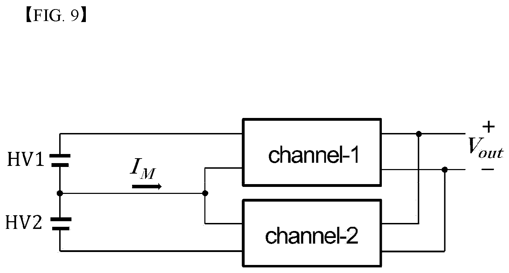

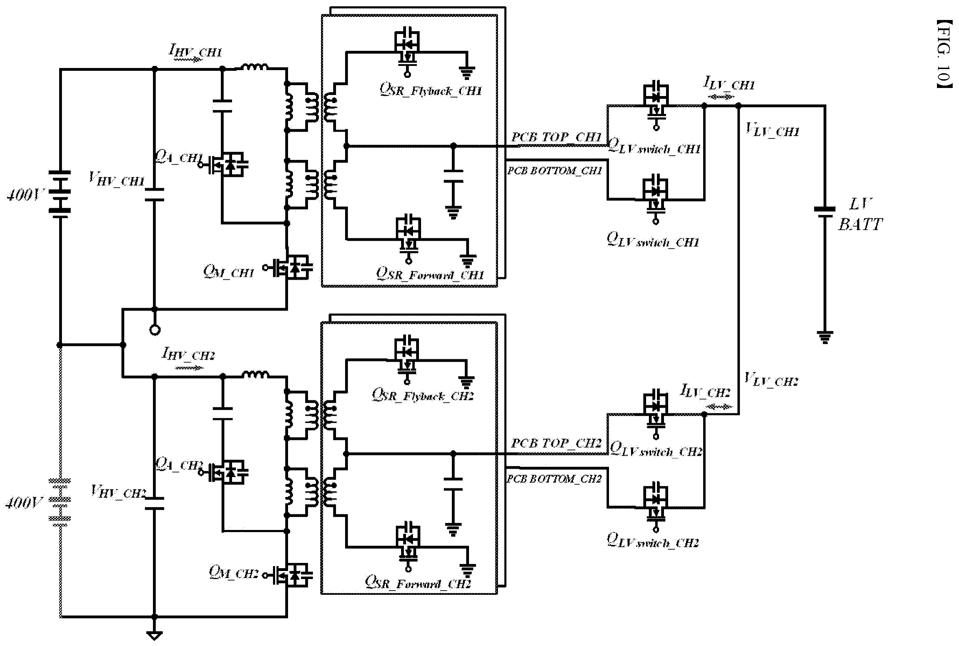

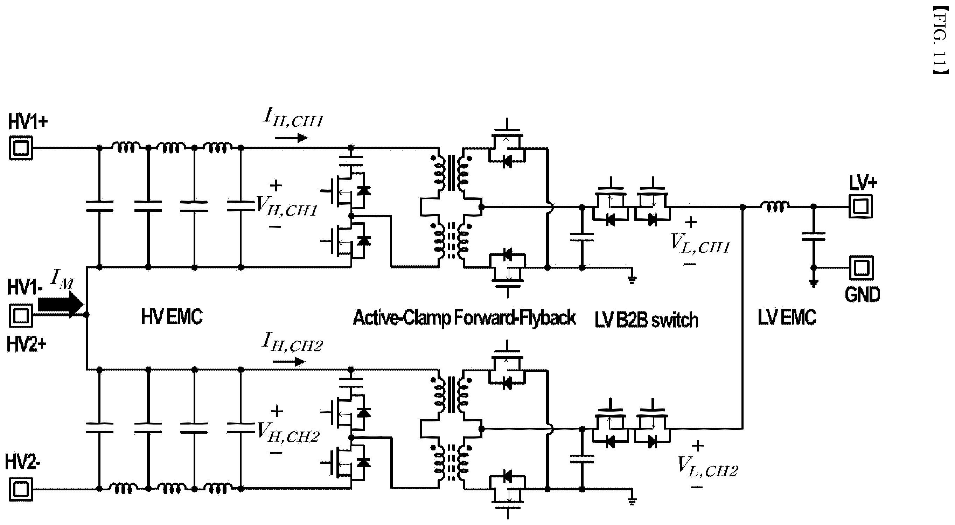

As shown in FIGS. 9 to 11, a first input/output unit may have two high voltage sides connected in series, and the voltage is converted through two power conversion units (161, 162), i.e., two channels, and the outputs of each channel are connected in parallel to output the voltage to the second input/output unit. Here, the power conversion device is a two-channel DC-DC converter with a serial input and parallel output structure, and may be a bidirectionally driven active clamp forward flyback converter.

The first-first input/output unit (111) and the first-second input/output unit (112) may be connected to the first high voltage side and the second high voltage side, respectively, which are connected in series. The first power conversion unit (161) may be connected to the first-first input/output unit (111), and the second power conversion unit (162) may be connected to the first-second input/output unit (112). The first power conversion unit (161) and the second power conversion unit (162) are connected in parallel and may be connected to the second input/output unit (150).

At this time, when the voltages on the two high voltage sides are different, current (I_M) flows between the two channels of the first power conversion unit (161) and the second power conversion unit (162), and the balance between the two channels may be disrupted. That is, if one of the batteries connected to the high voltage side discharges first and the voltage difference increases, it may become difficult to efficiently charge and discharge the battery, leading to a shortened battery life.

To maintain balancing, the operation of the first power conversion unit or the second power conversion unit can be controlled using the difference between the first input voltage of the first power conversion unit and the second input voltage of the second power conversion unit. This enables input voltage balancing.

The control unit (170) controls the first power conversion unit (161) and the second power conversion unit (162) to operate in peak current mode and compensates for the current rise slope of the peak current mode based on the difference between the first input voltage and the second input voltage.

Peak current mode is a control mode in which, when controlling a switch, the switch is turned on and the current increases according to the current rise slope until it reaches the reference voltage, at which point the switch remains on.

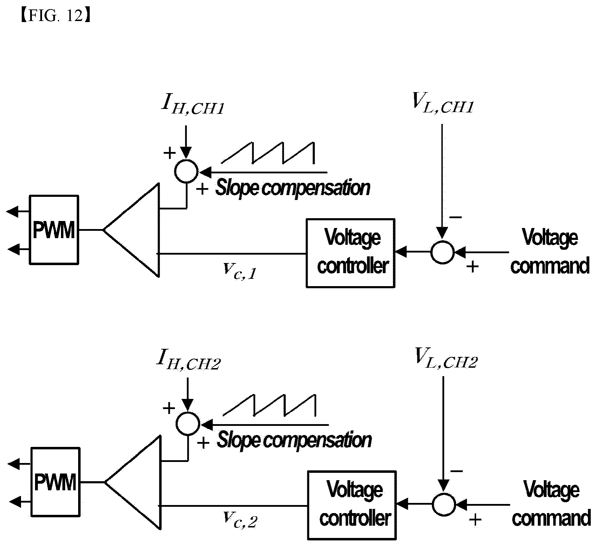

As shown in FIG. 12, the control unit (170) may generate PWM signals to be applied to each switch according to the peak current mode, and compensate for the current rise slope of the peak current mode according to the difference between the first input voltage and the second input voltage. When the first input voltage is smaller than the second input voltage, the current rise slope of the peak current mode of the first power conversion unit (161) becomes smaller. At this time, the current rise compensation slope of the peak current mode of the first power conversion unit (161) increases, thereby allowing the average current of the first power conversion unit to become smaller than the average current of the second power conversion unit. As a result, the current of the first power conversion unit (161) decreases, slowing down the discharge, thereby maintaining balance with the second power conversion unit (162). A compensation unit may be included that compensates for the difference between the first input voltage of the first power conversion unit and the second input voltage of the second power conversion unit, and a PWM signal applied to the first power conversion unit or the second power conversion unit can be generated according to the operation of the compensation unit. The first high voltage side may be connected to the first battery, and the second high voltage side may be connected to the second battery. The control unit (170) can control the operation of the first power converter (161) and the second power converter (162) to balance the first battery and the second battery.

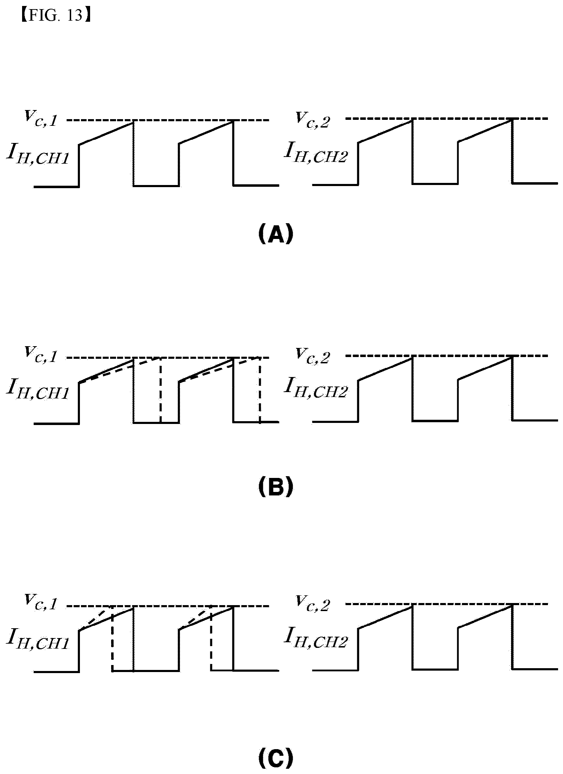

FIG. 13 (A) shows a basic current rise slope, and FIG. 13 (B) shows a case where balancing is not performed. In this case, a lower input voltage reduces the current rise slope, and if the current rise compensation slope is applied identically to the first power conversion unit (161) and the second power conversion unit (162), the input current of the first power conversion unit (161) becomes larger than that of the second power conversion unit (162). As a result, the battery connected to the first high voltage side discharges faster than the battery connected to the second high voltage side, and the current (I_M) at the midpoint connecting the first high voltage side and the second high voltage side gradually increases.

To prevent this, the current rise slope is compensated, and the current rise compensation slope may be calculated using the following Mathematical Equation.

[Mathematical Equation 1]

$$(\text{slope-1}) = k1 + k2(V\_H,CH2 - V\_H,CH1)$$

$$(\text{slope-2}) = k1 + k2(V\_H,CH1 - V\_H,CH2)$$

Here, slope-1 is a current rise compensation slope of the first power conversion unit, k1 and k2 are constants, V_H,CH1 is the first input voltage, and V_H,CH2 is the second input voltage.

When the above balancing control is applied, as shown in FIG. 13 (C), the current rise compensation slope of the first power conversion unit (161) increases, and as a result, the average current of the first power conversion unit (161) decreases, the battery connected to the first high voltage side discharges more slowly than the battery connected to the second high voltage side, and the current (I_M) at the midpoint connecting the first high voltage side and the second high voltage side gradually decreases until balancing is achieved, at which point it becomes 0 in the steady state.

For example, if V_H,CH1 is smaller than V_H,CH2, slope-1 may increase and slope-2 may decrease. When slope-1 increases, the switch of the first channel on the first power conversion unit side turns off first, causing the battery connected to the first high voltage side to discharge later and gradually equalize V_H,CH1 and V_H,CH2, thereby maintaining balancing.

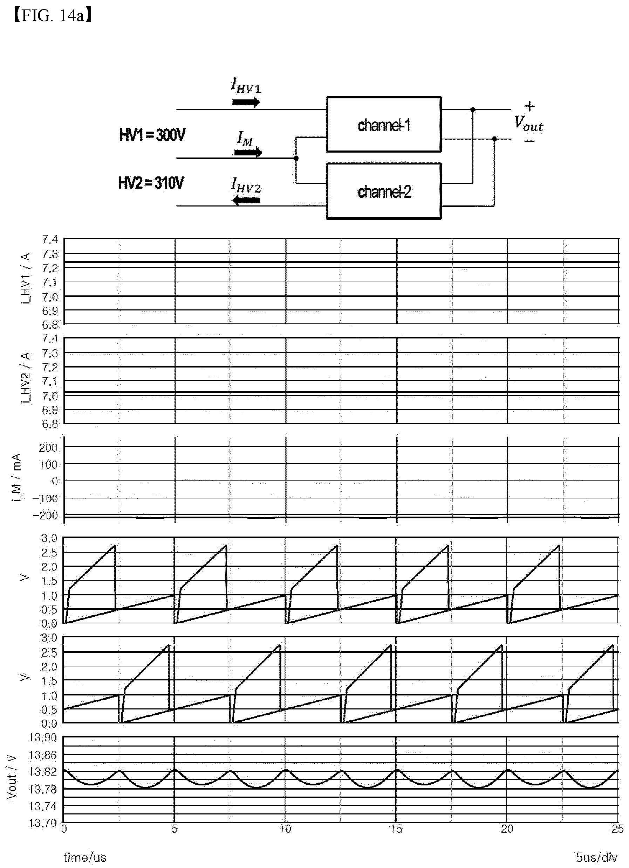

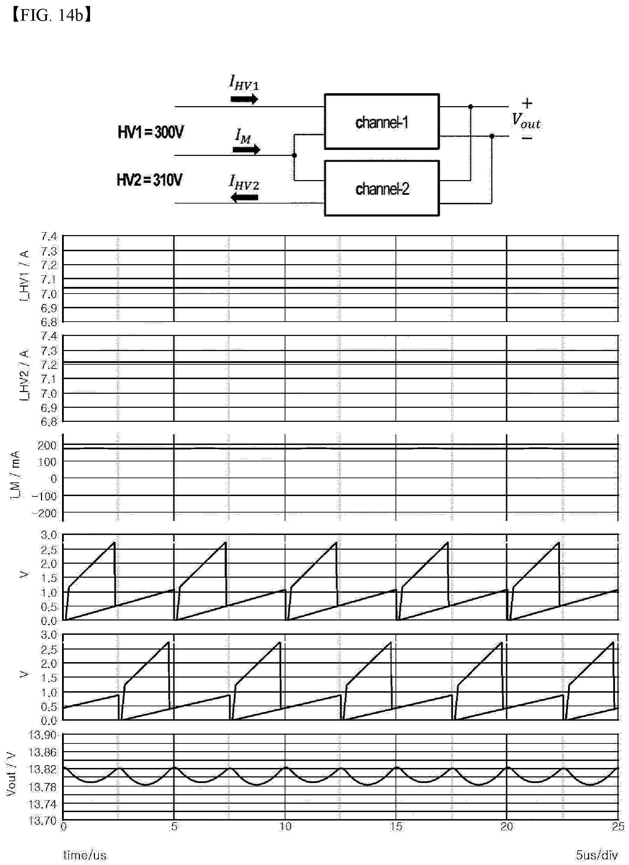

As shown in FIGS. 14a and 14b, when HV1 is 300 V and HV2 is 310 V, in FIG. 14a, which does not perform balancing, the pulse current (I_H,CH1) has a smaller rise slope than the pulse current (I_H,CH2) of channel 2, but the current rise compensation slope is the same. Therefore, the average current of the pulse current (I_H,CH1) in channel 1 becomes larger than the average current of channel 2 (IH,CH2). Since the input battery current (I_HV1) is the average current of the pulse current (I_H,CH1) in channel 1, the current in HV1 becomes larger than the current in HV2. In contrast, in the case of balancing performed in FIG. 14b, the rise slope of the pulse current (I_H,CH1) in channel 1 is smaller than the slope of the pulse current (I_H,CH2) in channel 2. Therefore, the average current of the pulse current (I_H,CH1) in channel 1 becomes smaller than that of channel 2 (I_H,CH2). Since the input battery current (I_HV1) is the average current of the channel 1 pulse current (I_H,CH1), the current in the first high-voltage side (HV1) is smaller than that in the second high-voltage side (HV2). This indicates that the intermediate point current becomes positive, meaning that the HV1 battery discharges more slowly than the HV2 battery. Ultimately, the intermediate point current decreases and reaches 0 in the normal steady state.

As mentioned earlier, the power conversion device according to the embodiment of the present invention operates in both directions. That is, it includes a first-first input/output unit and a first-second input/output unit connected to the first high voltage side and the second high voltage side, respectively, which are connected in series, and when the second input/output unit is connected in parallel, the voltages of the first high voltage side and the second high voltage side are converted to be outputted to the low voltage side, or converting the voltage of the low voltage side and outputting it to the first high voltage side or the second high voltage side, thereby enabling bidirectional operation.

The control unit (170) can control the first to fourth switches to operate in buck mode and boost mode. In this case, the control unit (170) controls the first high voltage side or the second high voltage side in buck mode, which receives voltage from the first high voltage side or the second high voltage side and steps down the voltage, in peak current mode, and controls the low voltage side in boost mode, which receives voltage from the low voltage side and steps up the voltage, in average current mode.

The control unit (170) is configured to control the buck mode or boost mode, and includes a constant current control signal generation unit (171), a soft start control signal generation unit (173), a signal selection unit (174), and a PWM generation unit (176), and may include a constant voltage control signal generation unit (172) and a slope compensation unit (175).

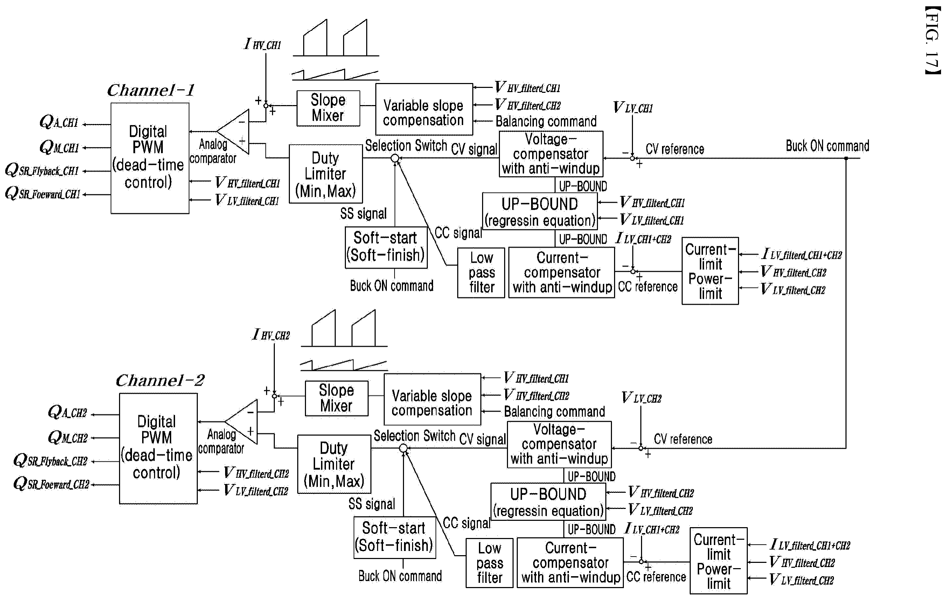

The configuration in buck mode and the configuration in boost mode may be configured as separate modules, or as a single module, but only the necessary configurations for each mode are used to enable bidirectional operation. In buck mode, control can be made through a constant current control signal generation unit (171), a soft start control signal generation unit (173), a signal selection unit (174), and a PWM generation unit (176), a constant voltage control signal generation unit (172), and a slope compensation unit (175). The constant current control signal generation unit (171) rectifies the voltage on the low voltage side and generates a constant current control signal, while the constant voltage control signal generation unit (172) rectifies the current and power on the low-voltage side and generates a constant voltage control signal, and the soft start control signal generation unit (173) can generate a soft start control signal that operates to block inrush current or peak voltage. The signal selection unit (174) may select the signal with the smallest value among the constant current control signal, the constant voltage control signal, and the soft start control signal. Additionally, the control unit (170) may control the first power conversion unit and the second power conversion unit in peak current mode, while the slope compensation unit (175) may compensate for the current rise slope in the peak current mode based on the difference between the first input voltage and the second input voltage. The control unit (170) may control the first to fourth switches in buck mode, and can control them in accordance with the description corresponding to FIG. 5. The operation of the control unit (170) in buck mode can be implemented as shown in FIG. 17.

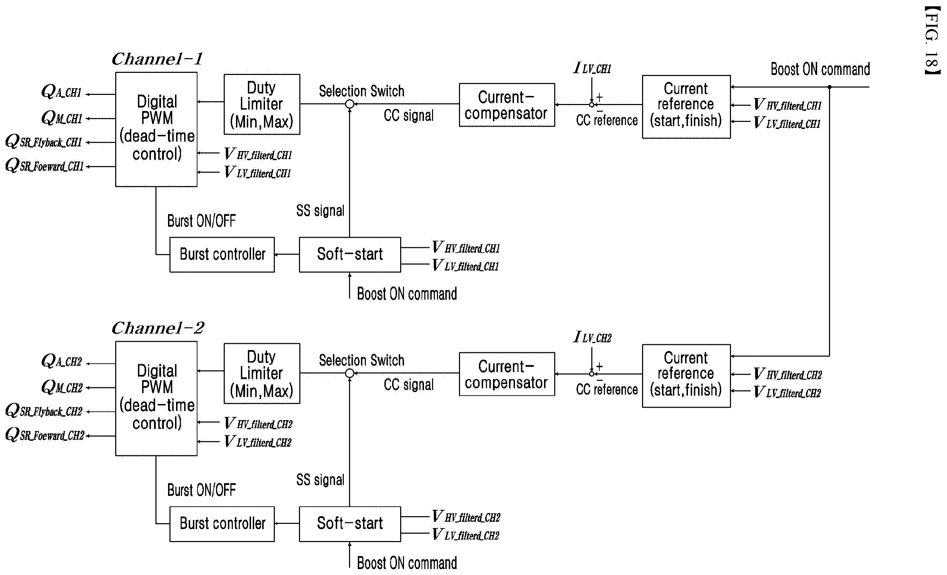

In boost mode, the constant current control signal generation unit (171), soft start control signal generation unit (173), signal selection unit (174), and PWM generation unit (176) can be controlled. The constant current control signal generation unit (171) may rectify the low-voltage side voltage and generate a constant current control signal. The soft start control signal generation unit (173) may generate a soft start control signal that operates to block inrush current or peak voltage. The signal selection unit (174) may select the signal with the smallest value among the constant current control signal, the constant voltage control signal, and the soft start control signal. Additionally, the control unit (170) can control the first power conversion unit and the second power conversion unit in average current mode. The operation of the control unit (170) in boost mode can be implemented as shown in FIG. 18.

The control unit (170) can control the first to fourth switches (142) differently in boost mode than in buck mode. The control unit (170) may include a PWM generation unit (176) that controls the dead time or delay time of the first to fourth switches (142).

The control unit (170) controls the first switch (122) to turn on after the second switch (121) is turned off and a first time has elapsed, and controls the second switch (121) to turn on after the first switch (122) is turned off and a second time has elapsed, wherein the first time is variable depending on the inputted voltage, and the second time may be a preset time.

Additionally, the control unit (170) may control the third switch (141) to operate in response to the operation of the second switch (121) or to operate after a pre-set time, and the fourth switch (142) to turn on after the second switch (121) is turned off and after the third time, and the first switch (122) is turned off and turned off after the fourth time. Here, the third time and the fourth time may vary depending on the output current.

The control unit (170) can control the third switch (141) to turn on after the first switch (122) is turned off and after the fifth time, and to turn on the fourth switch (142) and turn it off after the sixth time.

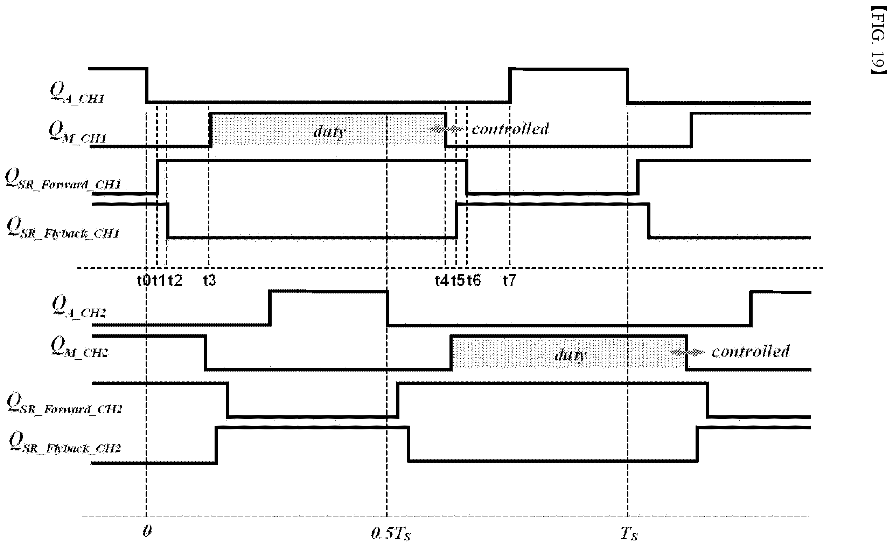

As shown in FIG. 19, during one cycle of boost mode, the second switch turns off at t0, the fourth switch turns on at t1, the third switch turns off at t2, the first switch turns on at t3, the first switch turns off at t4, the third switch turns on at t5, the fourth switch turns off at t6, and the second switch turns on at t7. The duty cycle refers to the time during which the first switch remains on.

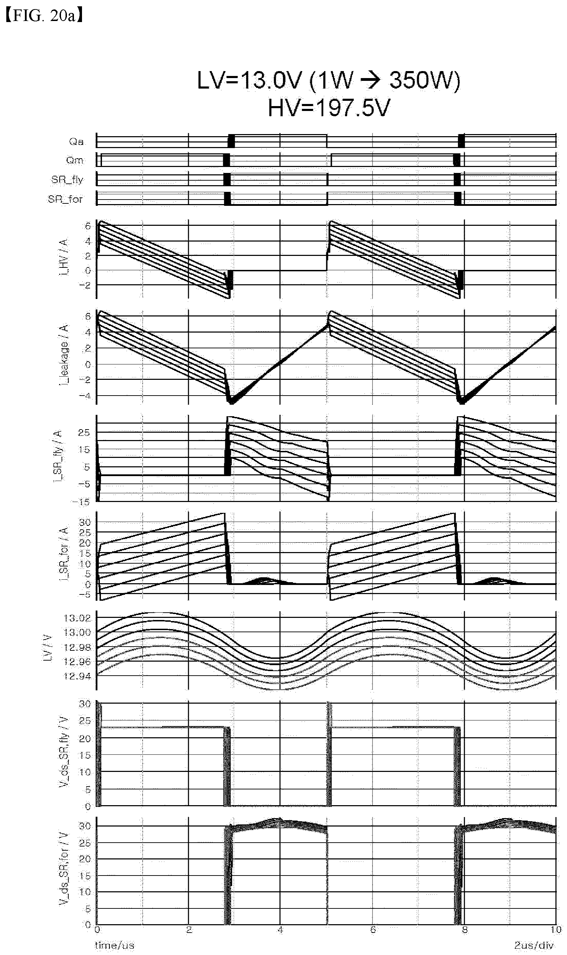

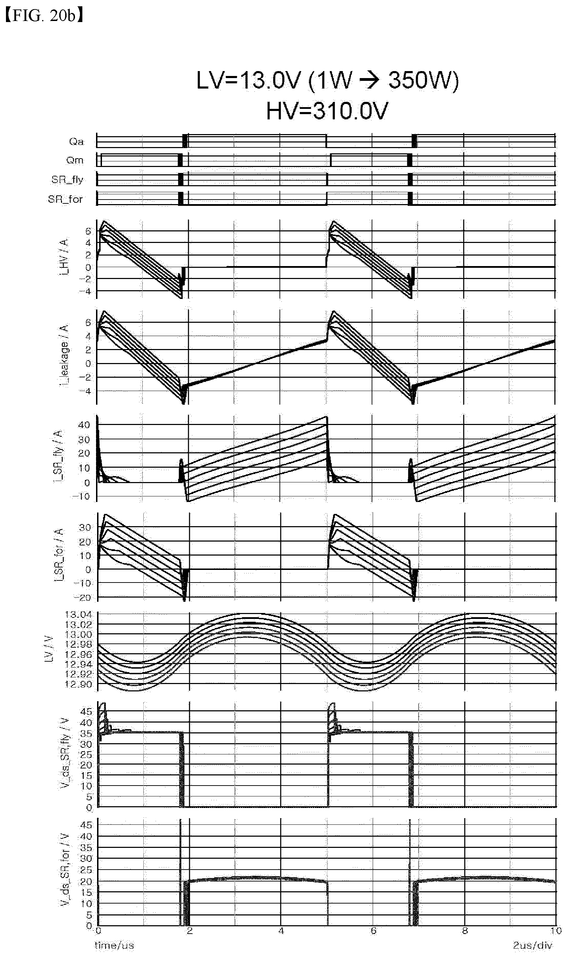

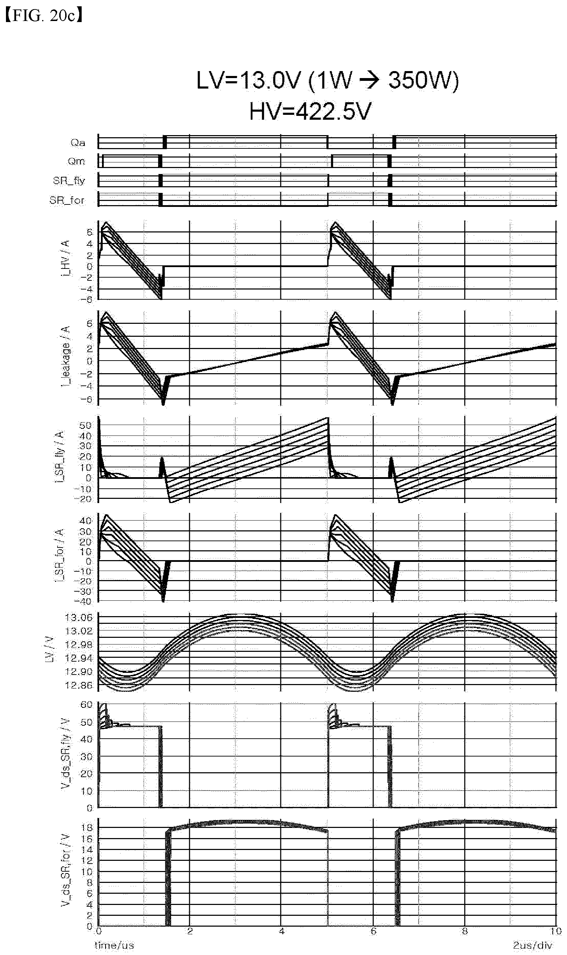

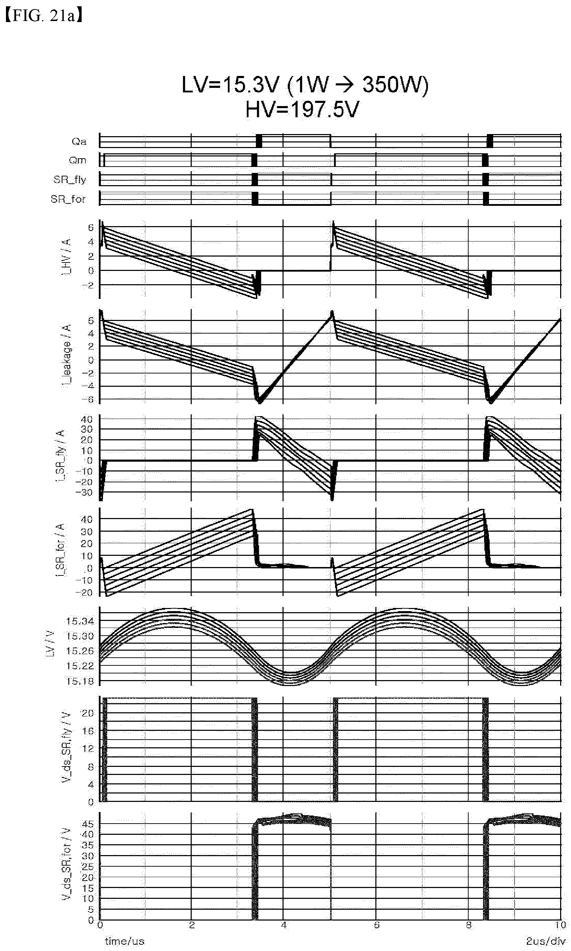

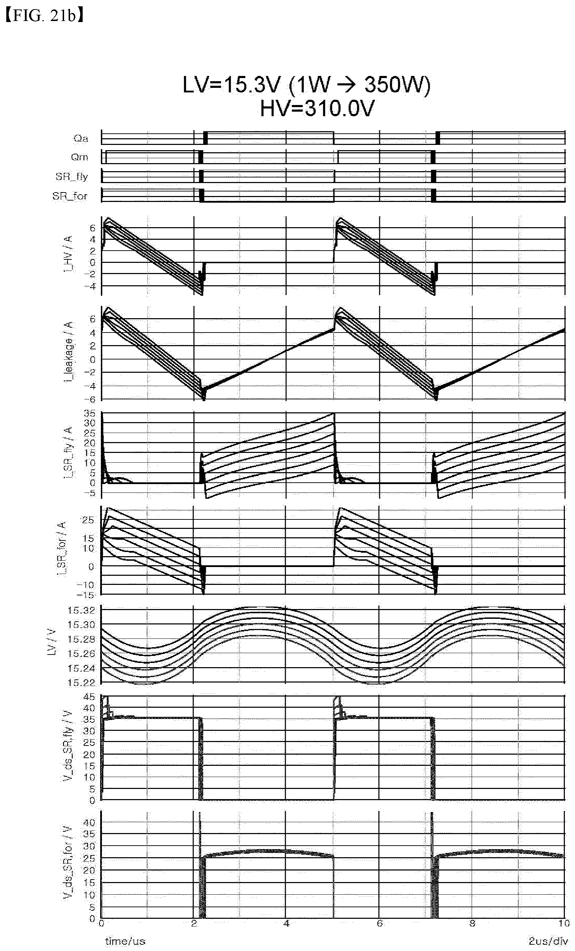

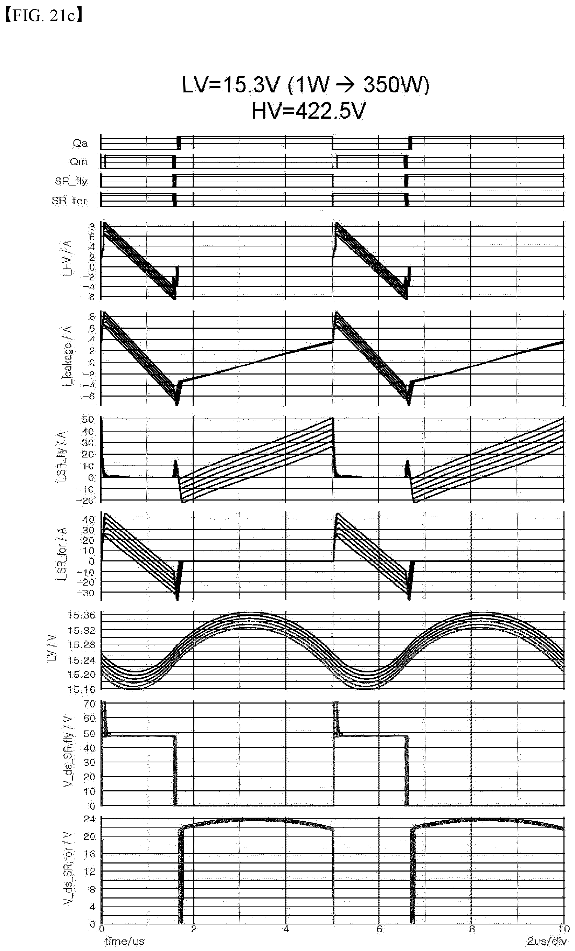

As described above, by controlling the operations of the first to fourth switches differently, the device can operate in buck mode or boost mode. The simulation results for the bidirectional operation of buck mode and boost mode are shown in FIGS. 20a to c and 21a to c.

The power conversion device according to the embodiment of the present invention can initially charge the high voltage side capacitor using the low voltage side voltage. In the power conversion device according to the embodiments shown in FIGS. 1 to 4, initial charging can be performed without a separate initial charging circuit by controlling the operation of the first to fourth switches.

The control unit (170) turns on the fourth switch (142), turns it off after the seventh time, and turns on the second switch (121) and the third switch (141) to initially charge the first capacitor (C1). The second switch (121) and the third switch (141) are turned off after the seventh time to charge the high voltage side capacitor. The time during which the second switch (121), the third switch (141), and the fourth switch (142) are kept on for the initial charge may all be the seventh time. The seventh time may be a pre-set time or the minimum time required to maintain the initial charge. During the initial charge, the control unit (170) may maintain the first switch (122) in the off state.

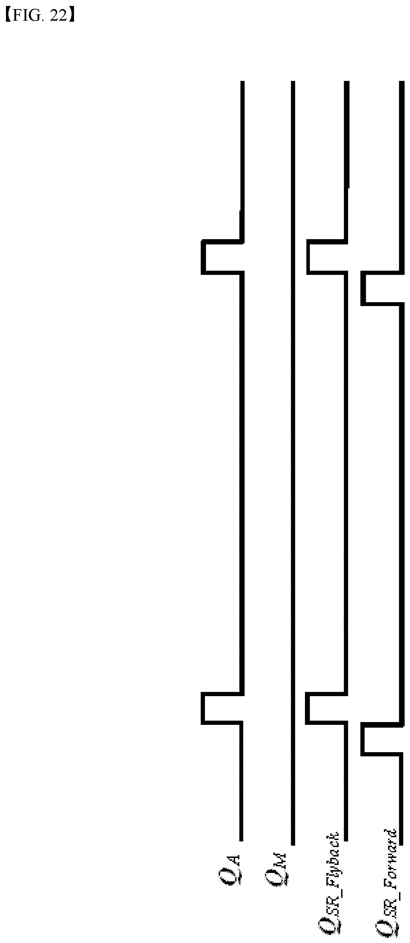

As shown in FIG. 22, the first switch (122) is maintained in the off state, the fourth switch (142) is turned on for a predetermined time, after the seventh time, the fourth switch (142) is turned off, the second switch (121) and the third switch (141) are turned on, and after the seventh time, they are turned off, thereby performing the initial charging.

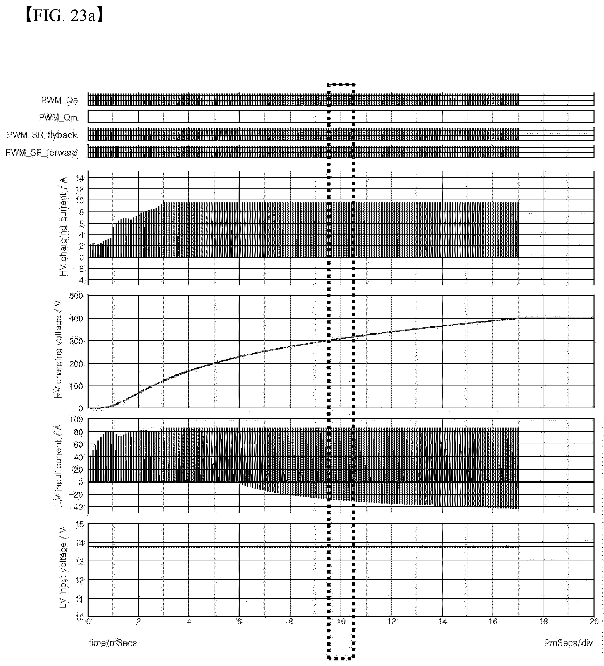

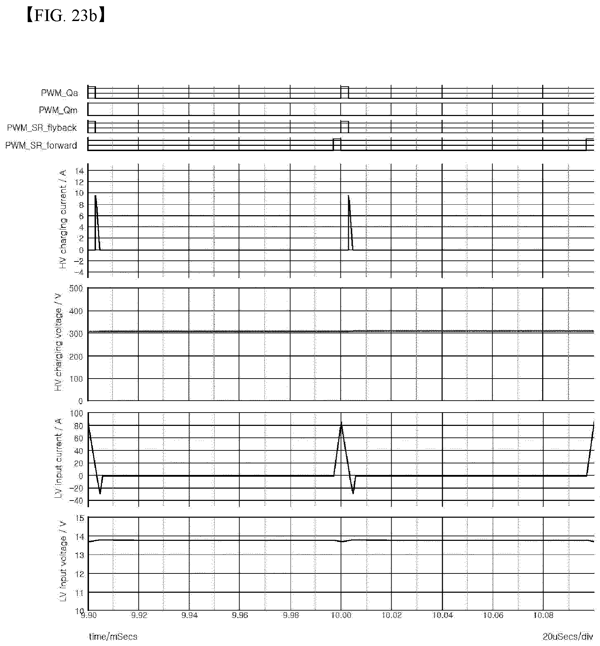

FIG. 23b is an enlarged view of FIG. 23a. During initial charging, the low voltage side input voltage is 13.8 V, the initial charging target voltage is 400 V, the high voltage side capacitor is 5 uF, and the switching frequency is 10 kHz. and the 7th time max is 3 us. It can be confirmed that it takes 17 ms to charge the high voltage side capacitor from 0 V to 400 V.

As described above, the power conversion device according to the embodiment of the present invention includes a first input/output unit (110), a first switching unit (120), a transformer unit (130), a second switching unit (140), a second input/output unit (150), a control unit (170), a first inductor (L1), a second inductor (L2), a third inductor (L3), and a first capacitor (C1), whereby the first switch (122) and the second switch (121) of the first switching unit (120), and the third switch (141) and the fourth switch (142), which are SR MOSFETs of the first switching unit (120) are controlled to enable bidirectional operation in buck mode and boost mode, and to achieve input voltage balancing and initial charging. As a result, stable voltage can be provided, and efficient power conversion is possible.

Those skilled in the art related to the field of the present embodiment will understand that the present invention may be implemented in modified forms without departing from the essential characteristics of the above description. Therefore, the disclosed methods should be considered from an explanatory perspective rather than a limited perspective. The scope of the present invention is not limited to the above description, but is defined by the scope of the appended claims, and all differences within the scope of the appended claims shall be interpreted as being included in the present invention.

**Claims**

1. A power conversion device comprising:

   a first-first input/output unit and a first-second input/output unit respectively connected to a first high voltage side and a second high voltage side connected in series;
   a first power conversion unit connected to the first-first input/output unit;
   a second power conversion unit connected to the first-second input/output unit;
   a second input/output unit connected to the first power conversion unit and the second power conversion unit and connected to a low voltage side; and
   a control unit that controls operation of the first power conversion unit or the second power conversion unit,
   wherein the control unit controls to convert voltages of the first high voltage side and the second high voltage side to output the converted voltage to the low voltage side, or convert a voltage of the low voltage side to output the converted voltage to the first high voltage side or the second high voltage side, and
   wherein the power conversion device operates bidirectionally.

2. The power conversion device of claim 1, wherein the control unit receives a voltage inputted from the first high voltage side or the second high voltage side and controls as peak current mode at a buck mode, which reduces voltage,, and receives a voltage inputted from the low voltage side and controls as average current mode at a boost mode, which increases the voltage.

3. The power conversion device of claim 2, wherein, in the buck mode, the control unit comprises:

   a constant current control signal generation unit configured to rectify the low voltage side voltage and generate a constant current control signal;
   a constant voltage control signal generation unit configured to rectify the low voltage side current and power and generate a constant voltage control signal;
   a soft start control signal generation unit configured to generate a soft start control signal to block inrush current or peak voltage; and
   a signal selection unit configured to select the smallest value signal among the constant current control signal, the constant voltage control signal, and the soft start control signal.

4. The power conversion device of claim 2, wherein the control unit in the buck mode controls the first power conversion unit and the second power conversion unit in peak current mode and compensates for a current rise slope in the peak current mode according to a difference between the first input voltage and the second input voltage.

5. The power conversion device of claim 2, wherein the first power conversion unit comprises:

   a first input/output unit connected to the first high voltage side;
   a first switching unit connected to the first input/output unit;
   a transformer unit comprising a first transformer and a second transformer, which are connected to the first switching unit at a primary side;
   a second switching unit connected to a secondary side of the transformer unit;
   a second input/output unit connected to the secondary side of the transformer unit and the low voltage side;
a control unit configured to control the first switching unit and the second switching unit, wherein the first switching unit comprises a first switch and a second switch that are complementarily conductive, and
wherein the second switching unit comprises a third switch connected at the secondary side of the first transformer; and a fourth switch connected at the secondary side of the second transformer.

6. The power conversion device of claim 5, wherein the control unit comprises a PWM generation unit configured to control a dead-time or a delay time of the first switch to the fourth switch.

7. The power conversion device of claim 6, wherein the first switch is connected in series with the transformer unit, the second switch is connected in parallel with the transformer unit,

wherein the first switch is turned on after a first time passes from when the second switch is turned off,
wherein the second switch is turned on after a second time passes from when the first switch is turned off,
wherein the first time varies depending on a voltage applied, and
wherein the second time is a preset time.

8. The power conversion device of claim 6, wherein, in the buck mode, the third switch operates in response to the operation of the second switch or operates in response after a predetermined time,

wherein the fourth switch is turned on after a third time passes from when the second switch is turned off, and turned off after a fourth time passes from when the first switch is turned off, and
wherein the third time and the fourth time vary depending on an output current.

9. The power conversion device of claim 2, wherein, in the boost mode, the control unit comprises:

a constant current control signal generation unit configured to rectify the low voltage side voltage and generate a constant current control signal;
a soft start control signal generation unit configured to generate a soft start control signal to block inrush current or peak voltage; and
a signal selection unit configured to select the smaller value signal between the constant current control signal and the soft start control signal.

[Claim 10] The power conversion device of claim 6, wherein, in the boost mode, the fourth switch is turned on after a third time passes from when the second switch is turned off, and turned off after a fourth time passes from when the first switch is turned off, and
wherein the third switch is turned on after a fifth time passes from when the first switch is turned off, and turned off after a sixth time passes from when the fourth switch is turned on.

【FIG. 1】

110

FIRST
INPUT/
OUTPUT
UNIT

120

FIRST
SWITCHING
UNIT

130

TRANSFORMER
UNIT

140

SECOND
SWITCHING
UNIT

150

SECOND
INPUT/
OUTPUT
UNIT

【FIG. 2】

110

FIRST
INPUT/
OUTPUT
UNIT

131

FIRST
TRANSFORMER

141

THIRD
SWITCH

150

SECOND
INPUT/
OUTPUT
UNIT

121

SECOND
SWITCHING
UNIT

132

SECOND
TRANSFORMER

142

FOURTH
SWITCH

122

FIRST
SWITCH

【FIG. 3】

【FIG. 4】

【FIG. 5】

【FIG. 6】

【FIG. 7】

【FIG. 8a】

HV=197.5V
LV=13.8V, 1W→2.7kW

【FIG. 8b】

## HV=310V
## LV=13.8V, 1W→2.7kW

time/uSecs                                    2uSecs/div

【FIG. 8c】

HV=422.5V
LV=13.8V, 1W→2.7kW

【FIG. 9】

【FIG. 10】

【FIG. 11】

【FIG. 12】

【FIG. 13】

**(A)**

**(B)**

**(C)**

【FIG. 14a】

【FIG. 14b】

【FIG. 15】

【FIG. 16】

【FIG. 17】

【FIG. 18】

【FIG. 19】

【FIG. 20a】

LV=13.0V (1W → 350W)
HV=197.5V

【FIG. 20b】

LV=13.0V (1W → 350W)
HV=310.0V

【FIG. 20c】

LV=13.0V (1W → 350W)
HV=422.5V

【FIG. 21a】

LV=15.3V (1W → 350W)
HV=197.5V

【FIG. 21b】

LV=15.3V (1W → 350W)
HV=310.0V

【FIG. 21c】

LV=15.3V (1W → 350W)
HV=422.5V

【FIG. 22】

$Q_A$

$Q_M$

$Q_{SR\_Flyback}$

$Q_{SR\_Forward}$

【FIG. 23a】

【FIG. 23b】

## INTERNATIONAL SEARCH REPORT

| International application No. |
|---|
| **PCT/KR2024/095067** |

| | |
|---|---|
| **A.** | **CLASSIFICATION OF SUBJECT MATTER** |
| | **H02M 3/335**(2006.01)i; **H02M 3/28**(2006.01)i; **H02M 3/158**(2006.01)i; **H02M 1/00**(2007.01)i |

According to International Patent Classification (IPC) or to both national classification and IPC

| | |
|---|---|
| **B.** | **FIELDS SEARCHED** |

Minimum documentation searched (classification system followed by classification symbols)

H02M 3/335(2006.01); B60L 50/50(2019.01); B60L 8/00(2006.01); B60W 10/26(2006.01); H02J 3/00(2006.01); H02J 3/38(2006.01); H02M 1/42(2007.01); H02M 1/44(2007.01); H02M 3/155(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력변환부(power converter), 양방향(bidirectional), 벅모드(buck mode), 부스트모드(boost mode), 피크 전류 모드(peak current mode), 평균 전류 모드(average current mode)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2019-0066486 A (KYUNGSHIN CORP.) 13 June 2019 (2019-06-13) See paragraphs [0025]-[0056] and figure 1. | 1 |
| Y | | 2,4 |
| A | | 3,5-10 |
| Y | US 2002-0000796 A1 (POPESCU, Lucian) 03 January 2002 (2002-01-03) See claims 4 and 8 and figure 4. | 2,4 |
| A | KR 10-2011-0068690 A (SAMSUNG SDI CO., LTD.) 22 June 2011 (2011-06-22) See claims 1-20 and figure 2. | 1-10 |
| A | KR 10-2017-0131895 A (EJINS CO., LTD.) 01 December 2017 (2017-12-01) See entire document. | 1-10 |

| | |
|---|---|
| ✓ Further documents are listed in the continuation of Box C. | ✓ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2024** | **20 May 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 668 565 A1

**INTERNATIONAL SEARCH REPORT**

International application No.

**PCT/KR2024/095067**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0012505 A (SAMSUNG ELECTRO-MECHANICS CO., LTD.) 03 February 2016 (2016-02-03)<br>See entire document. | 1-10 |

Form PCT/ISA/210 (second sheet) (July 2022)

**INTERNATIONAL SEARCH REPORT**
Information on patent family members

International application No.

**PCT/KR2024/095067**

| Patent document cited in search report | | | Publication date (day/month/year) | Patent family member(s) | | | Publication date (day/month/year) |
|---|---|---|---|---|---|---|---|
| KR | 10-2019-0066486 | A | 13 June 2019 | KR | 10-2074512 | B1 | 06 February 2020 |
| | | | | KR | 10-2088897 | B1 | 16 March 2020 |
| US | 2002-0000796 | A1 | 03 January 2002 | US | 6487097 | B2 | 26 November 2002 |
| KR | 10-2011-0068690 | A | 22 June 2011 | KR | 10-1094002 | B1 | 15 December 2011 |
| | | | | US | 2011-0140535 | A1 | 16 June 2011 |
| | | | | US | 8482155 | B2 | 09 July 2013 |
| KR | 10-2017-0131895 | A | 01 December 2017 | KR | 10-1903121 | B1 | 13 November 2018 |
| KR | 10-2016-0012505 | A | 03 February 2016 | US | 2016-0026205 | A1 | 28 January 2016 |
| | | | | US | 9575502 | B2 | 21 February 2017 |

Form PCT/ISA/210 (patent family annex) (July 2022)